(19) European Patent Office / Europäisches Patentamt / Office européen des brevets

(11) **EP 4 496 022 A1**

(12) **EUROPEAN PATENT APPLICATION**
published in accordance with Art. 153(4) EPC


(43) Date of publication:
**22.01.2025 Bulletin 2025/04**

(21) Application number: **22944196.9**

(22) Date of filing: **31.05.2022**

(51) International Patent Classification (IPC):
***H01M 4/13*** *(2010.01)* ***H01M 10/0567*** *(2010.01)*

(52) Cooperative Patent Classification (CPC):
**H01M 4/13; H01M 10/0567**

(86) International application number:
**PCT/CN2022/096293**

(87) International publication number:
**WO 2023/230859 (07.12.2023 Gazette 2023/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Contemporary Amperex Technology Co., Limited**
**Fujian 352100 (CN)**

(72) Inventors:
- **HUANG, Lei**
  **Ningde City, Fujian 352100 (CN)**
- **HAN, Changlong**
  **Ningde City, Fujian 352100 (CN)**
- **WU, Zeli**
  **Ningde City, Fujian 352100 (CN)**
- **ZHANG, Cuiping**
  **Ningde City, Fujian 352100 (CN)**
- **WANG, Fulin**
  **Ningde City, Fujian 352100 (CN)**

(74) Representative: **Kraus & Lederer PartGmbB**
**Thomas-Wimmer-Ring 15**
**80539 München (DE)**


# (54) SECONDARY BATTERY AND PREPARATION METHOD THEREFOR, BATTERY MODULE, BATTERY PACK, AND ELECTRIC DEVICE


(57) The present application provides a secondary battery and a method of preparing the secondary battery. The secondary battery includes a positive electrode plate and an electrolytic solution, wherein the positive electrode plate includes a positive electrode current collector and a positive electrode film layer provided on at least one surface of the positive electrode current collector, the positive electrode film layer has a porosity of P, the electrolytic solution includes a dehydrating additive, and based on a total mass of the electrolytic solution, a mass percentage of the dehydrating additive in the electrolytic solution is a, and the secondary battery satisfies: $0.2 \leq (a*100)/P \leq 3.5$. The secondary battery of the present application has improved initial direct current resistance (DCR) and high temperature cycle performance while having an improved porosity to balance high energy density and good dynamics. The present applicant further provides the battery module, battery pack and electrical device containing the secondary battery of the present application.


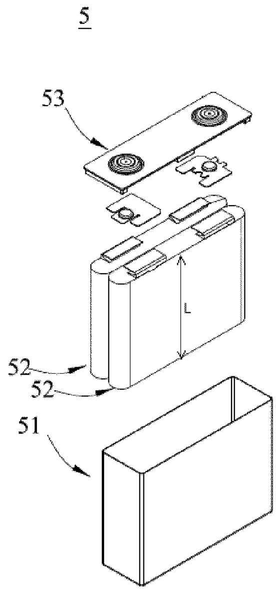


Fig. 2

EP 4 496 022 A1

## Description

### TECHNICAL FIELD

The present application relates to the technology field of lithium batteries, in particular to a secondary battery and a preparation process thereof, and a battery module, a battery pack and an electrical device containing the secondary battery.

### BACKGROUND

In recent years, as the application of lithium-ion batteries has become more and more extensive, lithium-ion batteries are widely used in energy storage power systems such as hydro, thermal, wind and solar power stations, as well as in a variety of fields, such as power tools, electric bicycles, electric motorcycles, electric vehicles, military equipment, aerospace and so on. As lithium-ion batteries have made great development, higher requirements have been put forward for their energy density, cycle performance and safety performance.

Upon designing high-performance secondary batteries, energy density of the batteries can be improved by taking a thicker coating amount and higher compaction density. With the increase of coating thickness or compaction density, there will be a gradual decrease of porosity from a current collector to the surface of active materials, which causes problems such as low infiltration and absorption efficiency of an electrolytic solution, slow lithium-ion migration rate, and larger internal resistance of batteries, and ultimately leads to an increase in the initial direct current resistance (DCR), and deterioration of cycle performance of batteries. By adding a pore-forming agent in the preparation of a positive electrode slurry, it is possible to adjust porosity of the electrode plate, thereby effectively improving infiltration of an electrolytic solution in the electrode and increasing migration rate of lithium ions. However, the positive electrode plate with high porosity is prone to water absorption, so that unwanted water is inevitably introduced in the preparation of the battery. In addition, the electrolytic solution of lithium-ion batteries autocatalytically produces water under high temperature conditions. This unwanted water in the secondary battery can produce a series of side reactions causing rapid deterioration of the battery performances.

Therefore, while improving porosity to balance high energy density and good dynamics, certain strategies need to be adopted to reduce the unwanted water in batteries to improve the effect of water on the initial direct current resistance (DCR) and high temperature cycle performance of Li-ion batteries.

### SUMMARY

The present application is based on the foregoing topic and aims to provide a secondary battery to reduce the adverse effect of water in batteries on the performances of the battery while enhancing porosity to balance high energy density and good dynamics, so as to enable the secondary battery to have an improved initial direct current resistance (DCR) and high temperature cycle performance, and to provide a method of preparing the secondary battery, and a battery module, a battery pack, and an electrical device comprising the secondary battery.

In order to achieve the above objects, a first aspect of the present application provides a secondary battery comprising a positive electrode plate and an electrolytic solution, wherein

the positive electrode plate comprises a positive electrode current collector and a positive electrode film layer provided on at least one surface of the positive electrode current collector, the positive electrode film layer has a porosity of P, the electrolytic solution comprises a dehydrating additive, and based on a total mass of the electrolytic solution, a mass percentage of the dehydrating additive in the electrolytic solution is a, and
the secondary battery satisfies:

$$0.2 \leqslant (a*100)/P \leqslant 3.5.$$

As a result, relative to the prior art, the secondary battery of the present application has improved initial direct current resistance (DCR) and high temperature cycle performance while enhancing porosity to balance high energy density and good dynamics.

In any embodiment, the secondary battery satisfies: $0.4 \le (a*100)/P \le 3.3$; optionally, the secondary battery satisfies: $1.0 \le (a*100)/P \le 1.7$.

By satisfying the above conditions, the initial direct current resistance (DCR) and/or high temperature cycle performance of the secondary battery can be further improved while ensuring that the secondary battery has an enhanced porosity to balance high energy density and good dynamics.

In any embodiment, the dehydrating additive is at least one selected from a compound of structural formula I, a compound of structural formula II, and an isocyanate compound,

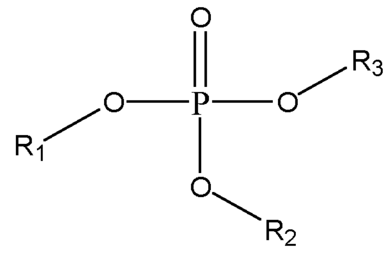

Formula I

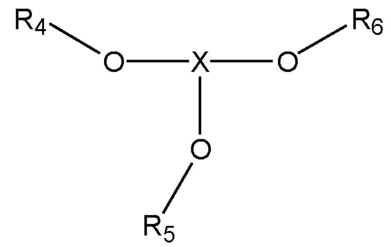

Formula II

in which

$R_1$, $R_2$, $R_3$, $R_4$, $R_5$ and $R_6$ are, independently of each other, silyl with a halogen-substituted or unsubstituted alkyl, or are a halogen-substituted or unsubstituted alkyl, and at least one of $R_1$, $R_2$ and $R_3$ is silyl with a halogen-substituted or unsubstituted alkyl and at least one of $R_4$, $R_5$ and $R_6$ is silyl with a halogen-substituted or unsubstituted alkyl,
optionally, the $R_1$, $R_2$, $R_3$, $R_4$, $R_5$ and $R_6$ are, independently of each other, silyl having an unsubstituted C1-C6 alkyl, or are an unsubstituted C1-C6 alkyl group, and at least one of $R_1$, $R_2$ and $R_3$ is silyl having an unsubstituted alkyl group, and at least one of $R_4$, $R_5$ and $R_6$ is silyl having an unsubstituted alkyl group,
further optionally, $R_1$, $R_2$, $R_3$, $R_4$, $R_5$ and $R_6$ are, independently of each other, silyl having methyl, ethyl, propyl, or are butyl, or a methyl, ethyl, propyl, or butyl, and at least one of $R_1$, $R_2$ and $R_3$ is silyl having methyl, ethyl, propyl, or butyl, at least one of $R_4$, $R_5$ and $R_6$ is silyl having methyl, ethyl, propyl, or butyl, and
X is phosphorus or boron.

By means of a dehydrating additive as at least one selected from a compound of structural formula I, a compound of structural formula II, and an isocyanate compound, it is possible effectively reduce the detrimental effect of water on the battery performances, resulting in a secondary battery having improved initial direct current resistance (DCR) and high temperature cycling performance.

In any embodiment, based on the total mass of the electrolytic solution, the mass percentage a of the dehydrating additive in the electrolytic solution is 0. 1%-1%, optionally, the mass percentage a of the dehydrating additive in the electrolytic solution is 0.3%-0.7%. When the mass percentage of the dehydrating additive in the electrolytic solution satisfies the above range, it is possible to effectively reduce the detrimental effect of water on the battery performances, so as to provide the secondary battery with improved initial direct current resistance (DCR) and high temperature cycle performance.

In any embodiment, the dehydrating additive is at least one selected from tris(trimethylsilyl) phosphate, tris(trimethylsilyl) phosphite, diethyltrimethylsilyl phosphite, tris(trimethylsilyl) borate, hexamethylene diisocyanate, trimethylsilyl isocyanate, tolylene diisocyanate, dicyclohexylmethane diisocyanate, and isophorone diisocyanate. By choosing the above dehydrating additive, it is possible to further improve the initial direct current resistance (DCR) and high temperature cycling performance of the secondary battery.

In any embodiment, the porosity P of the positive electrode film layer is from 20% to 70%, optionally, the porosity P of the positive electrode film layer is from 30% to 50%. When the porosity of the positive electrode film layer satisfies the above range, it is favorable to promote infiltration of the electrolytic solution and promote lithium ion transmission inside the positive electrode plate, so that the secondary battery has a lower initial direct current resistance (DCR).

In any embodiment, the electrolytic solution comprises a film-forming additive, and based on the total mass of the electrolytic solution, the mass percentage of the film-forming additive in the electrolytic solution is b, and the secondary

battery satisfies: 0.03 ≤ a/b ≤ 0.7. By adding the film-forming additive to the electrolytic solution, it is possible to improve the high-temperature cycle performance of the secondary battery; and by making the amount of the dehydrating additive and the film-forming additive in the electrolytic solution to satisfy the above condition, it is possible to improve the initial direct current resistance (DCR) and high temperature cycle performance of the secondary battery.

In any embodiment, the secondary battery satisfies: 0.05 ≤ a/b ≤ 0.5; optionally, the secondary battery satisfies: 0.15 ≤ a/b ≤ 0.35. By making the secondary battery to satisfy the above conditions, it is possible to further reduce the unfavorable effect of water on the battery performances, so that the initial direct current resistance (DCR) and high temperature cycling performance of the secondary battery can be further improved.

In any embodiment, the film-forming additive is at least one selected from adiponitrile, lithium difluoro-oxalate borate, vinyl ethylene carbonate, lithium difluorophosphate, lithium tetrafluoroborate, vinylidene carbonate, 1,3-propanesultone, and lithium trifluoromethanesulfonate. By selecting the afore-mentioned the film-forming additives, it is possible to form a protective film (SEI film) on the surface of the positive and negative electrodes, to mitigate deterioration of the battery performances due to warming, thereby further improving the initial direct current resistance (DCR) and high temperature cycling performance of the secondary battery.

In any embodiment, the electrolytic solution comprises a lithium salt, the lithium salt is at least one selected from lithium hexafluorophosphate, lithium difluorooxalate borate and lithium bis(fluorosulfonyl)imide, and the mass percentage of the lithium salt in the electrolytic solution is 5%-18% based on the total mass of the electrolytic solution. By selecting the lithium salt, and by selecting the content of the lithium salt in the electrolytic solution, it is possible to improve the initial direct current resistance (DCR) and high temperature cycling performance of the secondary battery.

A second aspect of the present application provides a method of preparing a secondary battery of the first aspect of the present application, comprising preparing a positive electrode plate, wherein

preparing the positive electrode plate comprises forming a positive electrode film layer on at least one surface of the positive electrode current collector, in which the positive electrode film layer is formed by applying a positive electrode slurry on one surface of the positive electrode current collector, and the positive electrode slurry comprises a positive electrode active material and a pore-forming agent.

Thereby, while ensuring a high coating amount, the porosity of the positive electrode film layer is increased by adding a pore-forming agent in the preparation of the positive electrode plate, which is conducive to promoting infiltration of the electrolytic solution and lithium ion transmission inside the positive electrode plate, so as to enable the secondary battery to have a low initial direct current resistance (DCR). Meanwhile, a dehydrating additive is added to the electrolytic solution, which effectively reduces the unfavorable effect of unwanted water (including water brought about by the increase in porosity of the positive electrode plate due to the use of a pore-forming agent and water generated by the lithium-ion battery at a high temperature) and thus improves the initial direct current resistance (DCR) and high temperature cycle performance of the lithium-ion battery.

In any embodiment, the pore-forming agent is at least one selected from oxalic acid, ammonium bicarbonate, ammonium carbonate, urea, ammonium chloride, and ammonium fluoride, and a mass ratio of the pore-forming agent to the positive electrode active material is 1:100-8:100. By selecting the above-described pore-forming agent, it is possible to form well-distributed pores in the positive electrode plate, and by setting the mass ratio of the pore-forming agent and the positive electrode active material to satisfy the above-described ratio, it is possible to ensure electrolytic solution's effective infiltration and absorption, and to effectively enhance migration speed of lithium ions, thereby making the secondary battery to have a good initial direct current resistance (DCR).

A third aspect of the present application provides a battery module comprising a secondary battery of the first aspect of the present application or a secondary battery prepared according to the method of the second aspect of the present application.

A fourth aspect of the present application provides a battery pack comprising the battery module of the third aspect of the present application.

A fifth aspect of the present application provides an electrical device comprising at least one selected from a secondary battery of the first aspect of the present application or a secondary battery prepared according to the method of the second aspect of the present application, a battery module of the third aspect of the present application, and a battery pack of the fourth aspect of the present application.

The battery module, the battery pack and the electrical device of the present application comprise a secondary battery provided in the first aspect of the present application and/or a secondary battery prepared according to the method of the second aspect of the present application, and thus have at least the same advantages as the secondary battery.

## DESCRIPTION OF THE DRAWINGS

Fig. 1 is a schematic diagram of an embodiment of a secondary battery of the present application.

Fig. 2 is an exploded schematic diagram of an embodiment of the secondary battery in Fig. 1.
Fig. 3 is a schematic diagram of an embodiment of a battery module of the present application.
Fig. 4 is a schematic diagram of an embodiment of a battery pack of the present application.
Fig. 5 is an exploded schematic diagram of an embodiment of the battery pack shown in Fig. 4.
Fig. 6 is a schematic diagram of an embodiment of an electrical device including the secondary battery of the present application as a power source.

Reference numerals are as follows:

1. Battery pack; 2. Upper box body; 3. Lower box body; 4. Battery module; 5. Secondary battery; 51. Housing; 52. Electrode assembly; 53. Cover plate;

## DETAILED DESCRIPTION

Hereinafter, embodiments of the secondary battery and the preparation process thereof, and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution.

Unless stated otherwise, all the features and the optional features of the present application can be combined with each other to form a new technical solution.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

Upon designing high-performance secondary batteries, energy density of the batteries can be improved by taking a thicker coating amount and higher compaction density. With the increase of coating thickness or compaction density, there will be a gradual decrease of porosity from a current collector to the surface of active materials, which causes problems such as low infiltration and absorption efficiency of an electrolytic solution, slow lithium-ion migration rate, and larger internal resistance of batteries, and ultimately leads to the deterioration of the rate performance and cycle performance of batteries. By adding a pore-forming agent in the preparation of a positive electrode slurry, it is possible to adjust porosity of the electrode plate, effectively improve infiltration of an electrolytic solution on the electrode plate and increase migration rate of lithium ions, so that problems such as poor rate performance and poor cycle performance

caused by the increase in compaction density or thickness of the positive electrode plate can be greatly improved. However, the positive electrode plate with high porosity is prone to water absorption, thus unwanted water is inevitably introduced in the preparation of the battery. In addition, the electrolytic solution of secondary batteries autocatalytically produces water under high temperature conditions. This unwanted water in the secondary battery can produce a series of side reactions causing rapid deterioration of the battery performances. Therefore, while ensuring the secondary batteries having an improved porosity to balance high energy density and good dynamics, certain strategies need to be adopted to reduce the unwanted water (including water brought about by the increase in porosity of the positive electrode plate due to the use of a pore-forming agent and water generated by the secondary battery at a high temperature) in batteries to improve the initial direct current resistance (DCR) and high temperature cycle performance of secondary batteries.

In response to the above, the present application provides a secondary battery comprising a positive electrode plate and an electrolytic solution, wherein

the positive electrode plate comprises a positive electrode current collector and a positive electrode film layer provided on at least one surface of the positive electrode current collector, the positive electrode film layer has a porosity of P, the electrolytic solution comprises a dehydrating additive, and based on a total mass of the electrolytic solution, a mass percentage of the dehydrating additive in the electrolytic solution is a, and

the secondary battery satisfies:

$$0.2 \leqslant (a*100)/P \leqslant 3.5.$$

It was surprisingly found by the inventors that while ensuring a higher coating amount and higher compaction density to increase energy density of batteries, by adjusting the porosity of the positive electrode film layer, it is possible to effectively improve infiltration of the electrolytic solution on the electrode plates and increase migration rate of lithium ions, so as to enable the secondary battery to have a low initial direct current resistance (DCR). Meanwhile, by adding a dehydrating additive to the electrolytic solution, it is possible to effectively reduce the unfavorable effect of unwanted water on the battery performances, and by making the porosity of the positive electrode film layer and the amount of the dehydrating additive in the electrolytic solution of secondary batteries to satisfy the above formula, it is possible to obtain secondary batteries having high energy density and improved initial direct current resistance (DCR) and high temperature cycle performance.

In some embodiments, the secondary battery satisfies: $0.4 \leq (a*100)/P \leq 3.3$; optionally, the secondary battery satisfies: $1.0 \leq (a*100)/P \leq 1.7$. When the amount of the dehydrafting additive is too small, and the porosity of the electrode plate is too large, too much water is easy to be introduced into the battery, and the effect of water-removing by the electrolytic solution is not obvious, resulting in poor high-temperature cycle performance of the secondary battery; when the amount of the dehydrating additive is too much, the porosity of the electrode plate is too small, and the film-forming resistance of the dehydrating additive is larger, it leads to the deterioration of the initial DC resistance (DCR) of the secondary battery. By satisfying the above conditions, it is possible to further improve the initial DC resistance (DCR) and/or high-temperature cycle performance of the secondary battery while ensuring high energy density of the secondary battery.

In some embodiments, the dehydrating additive is at least one selected from a compound of structural formula I, a compound of structural formula II, and an isocyanate compound,

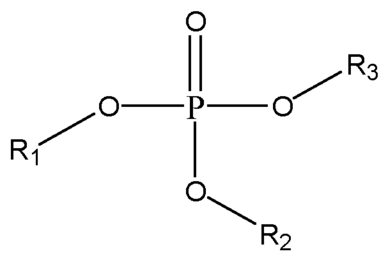

Formula I

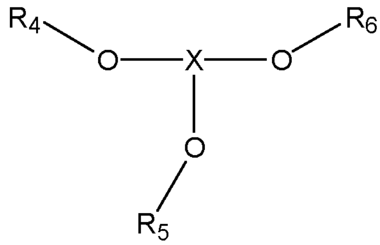

Formula II

in which

$R_1$, $R_2$, $R_3$, $R_4$, $R_5$ and $R_6$ are, independently of each other, silyl with a halogen-substituted or unsubstituted alkyl, or are a halogen-substituted or unsubstituted alkyl, and at least one of $R_1$, $R_2$ and $R_3$ is silyl with a halogen-substituted or unsubstituted alkyl and at least one of $R_4$, $R_5$ and $R_6$ is silyl with a halogen-substituted or unsubstituted alkyl,
optionally, the $R_1$, $R_2$, $R_3$, $R_4$, $R_5$ and $R_6$ are, independently of each other, silyl having an unsubstituted C1-C6 alkyl, or are an unsubstituted C1-C6 alkyl group, and at least one of $R_1$, $R_2$ and $R_3$ is silyl having an unsubstituted alkyl group, and at least one of $R_4$, $R_5$ and $R_6$ is silyl having an unsubstituted alkyl group,
further optionally, $R_1$, $R_2$, $R_3$, $R_4$, $R_5$ and $R_6$ are, independently of each other, silyl having methyl, ethyl, propyl, or are butyl, or a methyl, ethyl, propyl, or butyl, and at least one of $R_1$, $R_2$ and $R_3$ is silyl having methyl, ethyl, propyl, or butyl, at least one of $R_4$, $R_5$ and $R_6$ is silyl having methyl, ethyl, propyl, or butyl, and
X is phosphorus or boron. By means of a dehydrating additive as at least one selected from a compound of structural formula I, a compound of structural formula II, and an isocyanate compound, it is possible effectively reduce the detrimental effect of water on the battery performances, resulting in a secondary battery having improved initial direct current resistance (DCR) and high temperature cycling performance.

In some embodiments, based on the total mass of the electrolytic solution, the mass percentage a of the dehydrating additive in the electrolytic solution is 0.1%-1%, optionally, the mass percentage a of the dehydrating additive in the electrolytic solution is 0.3%-0.7%. When the mass percentage of the dehydrating additive in the electrolytic solution satisfies the above range, it is possible to effectively reduce the detrimental effect of water on the battery performances, so as to provide the secondary battery with improved initial direct current resistance (DCR) and high temperature cycle performance.
In some embodiments, the dehydrating additive is at least one selected from tris(trimethylsilyl) phosphate, tris(trimethylsilyl) phosphite, diethyltrimethylsilyl phosphite, tris(trimethylsilyl) borate, hexamethylene diisocyanate, trimethylsilyl isocyanate, tolylene diisocyanate, dicyclohexylmethane diisocyanate, and isophorone diisocyanate. The dehydrating additive can bind with water in the secondary battery to prevent water from damaging the electrode interface and to improve stability of the electrolytic solution thus improving performances of the secondary battery. By choosing the above dehydrating additive, it is possible to further improve the initial direct current resistance (DCR) and high temperature cycling performance of the secondary battery.
In some embodiments, the porosity P of the positive electrode film layer is from 20% to 70%, optionally, the porosity P of the positive electrode film layer is from 30% to 50%. When the porosity of the positive electrode film layer satisfies the above range, it is favorable to promote infiltration of the electrolytic solution and promote lithium ion transmission inside the positive electrode plate, so that the secondary battery has a lower initial direct current resistance (DCR). In the present application, the porosity P of the positive electrode film layer can be measured according to GB/T 24586-2009, and the porosity in the present application is expressed in %.
In some embodiments, the electrolytic solution comprises a film-forming additive, and based on the total mass of the electrolytic solution, a mass percentage of the film-forming additive in the electrolytic solution is b, and the secondary battery satisfies: $0.03 \leq a/b \leq 0.7$. The film-forming additive in the electrolytic solution has an good film-forming effect, and can form a solid electrolyte interface film (SEI film) by electrochemical reaction on the surface of a negative electrode during an initial charging and discharging of the lithium battery, thereby effectively inhibiting intercalation of solvent molecules, and improving high-temperature cycle performance of the secondary battery. The amount of the dehydrating additive and in the electrolytic solution and of the film-forming additive satisfy the above conditions, which can improve the initial direct current resistance (DCR) and high temperature cycle performance of the secondary battery. In the present application, a ratio (i.e., a/b) of the mass percentage a of the dehydating additive in the electrolytic solution to the mass percentage b of the film-forming additive refers to a ratio of the dehydrating additive added to the film-forming additive added in the preparation of the electrolytic solution. In the present application, the mass percentage a of the dehydating additive and the mass percentage b of the film-forming additive in the electrolytic solution are both expressed in %.
In some embodiments, the secondary battery satisfies: $0.05 \leq a/b \leq 0.5$; optionally, the secondary battery

satisfies: 0.15 ≤ a/b ≤ 0.35. By making the secondary battery to satisfy the above conditions, it is possible to further reduce the unfavorable effect of water on the battery performances, so that the initial direct current resistance (DCR) and high temperature cycling performance of the secondary battery can be further improved.

In some embodiments, the film-forming additive is at least one selected from adiponitrile, lithium difluoro-oxalate borate, vinyl ethylene carbonate, lithium difluorophosphate, lithium tetrafluoroborate, vinylidene carbonate, 1,3-propanesultone, and lithium trifluoromethanesulfonate. By selecting the afore-mentioned the film-forming additives, it is possible to form a protective film (SEI film) on the surface of the positive and negative electrode plates, to mitigate deterioration of the battery performances due to warming, thereby further improving the initial direct current resistance (DCR) and high temperature cycling performance of the secondary battery.

In some embodiments, the electrolytic solution comprises a lithium salt, the lithium salt is at least one selected from lithium hexafluorophosphate, lithium difluorooxalate borate and lithium bis(fluorosulfonyl)imide, and a mass percentage of the lithium salt in the electrolytic solution is 5%-18% based on the total mass of the electrolytic solution. The decomposition of lithium salts, such as lithium hexafluorophosphate ($LiPF_6$), is conducive to the formation of a solid electrolyte interface film (SEI film), which can effectively improve the electrode passivation layer, prevent the erosion of water, reduce the side reaction and extend the battery life. When the content of lithium salt is too high, on the one hand, the electrolytic solution containing the same has a too high viscosity and is difficult to infiltrate pores, which is not conducive to lithium ion transport; on the other hand, its decomposition products (such as fluorophosphates and lithium fluoride) have a too high content, which will deteriorate the initial direct current resistance (DCR) of the secondary battery. If the content of the lithium salt is too low, it leads to the formation of components (e.g., fluorophosphates and lithium fluoride) of the SEI film, which affects the high-temperature cycle performance of the secondary battery. By selecting the lithium salt described above, and by selecting the content of lithium salts in the electrolytic solution, it is possible to improve the initial direct current resistance (DCR) and high temperature cycling performance of the secondary battery.

In some embodiments, the electrolytic solution comprises an organic solvent, and the organic solvent is at least one selected from dimethyl carbonate, diethyl carbonate, methyl ethyl carbonate, ethylene carbonate, propylene carbonate, fluoroethylene carbonate, and sulfolane. The organic solvent in the electrolytic solution facilitates the dissociation of lithium salts and enhances the conductivity of the electrolytic solution, and some organic solvent components such as ethylene carbonate and sulfolane also participate in the formation of the SEI film to avoid the damage of the SEI film caused by water, thereby enhancing interfacial stability.

A second aspect of the present application provides a method of preparing a secondary battery of the first aspect of the present application, comprising preparing a positive electrode plate, wherein

preparing the positive electrode plate comprises forming a positive electrode film layer on at least one surface of the positive electrode current collector, in which the positive electrode film layer is formed by applying a positive electrode slurry on one surface of the positive electrode current collector, and the positive electrode slurry comprises a positive electrode active material and a pore-forming agent.

With a high coating amount guaranteed, the porosity of the positive electrode film layer is increased by adding a pore-forming agent in the preparation of the positive electrode plate, which is conducive to promoting infiltration of the electrolytic solution and lithium ion transmission inside the positive electrode plate, so as to enable the secondary battery to have a low initial direct current resistance (DCR). Meanwhile, a dehydrating additive is added to the electrolytic solution, which effectively reduces the unfavorable effect of unwanted water (including water brought about by the increase in porosity of the positive electrode plate due to the use of a pore-forming agent and water generated by the lithium-ion battery at a high temperature), thereby improving the initial direct current resistance (DCR) and high temperature cycling performance of the lithium ion battery.

Further, the secondary battery, the battery module, the battery pack, and the electrical device of the present application are described below with due reference to the accompanying drawings.

In one embodiment of the present application, a secondary battery is provided.

Typically, the secondary battery comprises a positive electrode plate, a negative electrode plate, an electrolyte, and a separator. During charging and discharging of the battery, active ions are intercalated and de-intercalated back and forth between the positive electrode plate and the negative electrode plate. The electrolyte acts as a conductor of ions between the positive electrode plate and the negative electrode plate. The separator is provided between the positive electrode plate and the negative electrode plate, which mainly serves to prevent the positive and negative electrodes from short-circuiting, and allows ions to pass through. In the present application, the battery has a volume filling ratio of 88%-98%.

[Positive electrode plate]

The positive electrode plate comprises a positive electrode current collector and a positive electrode film layer provided on at least one surface of the positive electrode current collector, and the positive electrode film layer comprises a positive electrode active material of the first aspect of the present application.

As an example, the positive electrode current collector has two surfaces opposite each other in its own thickness direction, and the positive electrode film layer is provided on either or both of the two surfaces of the positive electrode current collector.

In some embodiments, the positive electrode current collector may be a metal foil or a composite current collector. For example, as a metal foil, an aluminum foil may be used. The composite current collector may comprise a polymeric material base layer and a metal layer formed on at least one surface of the polymeric material base layer. The composite current collector may be formed by forming a metallic material (aluminum, aluminum alloys, nickel, nickel alloys, titanium, titanium alloys, silver and silver alloys, and the like) on a polymeric material substrate (e.g., a substrate made of polypropylene (PP), polyethylene terephthalate (PET), polybutylene terephthalate (PBT), polystyrene (PS), polyethylene (PE), and the like).

In some embodiments, the positive electrode active material may be a positive electrode active material known in the art for batteries. As an example, the positive electrode active material may comprise at least one of lithium-containing phosphates with an olivine structure, lithium transition metal oxides, and their respective modified compounds. However, the present application is not limited to these materials, and other conventional materials that may be used as a positive electrode active material of batteries may also be used. These positive electrode active materials may be used single or in combination. Examples of lithium transition metal oxides may include, but are not limited to, lithium cobalt oxides (e.g., $LiCoO_2$), lithium nickel oxides (e.g., $LiNiO_2$), lithium manganese oxides (e.g., $LiMnO_2$, $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (which may also be abbreviated as NCM333), $LiNi_{0.5}Co_{0.2}Mn_{0.3}O_2$ (also referred to as NCM523), $LiNi_{0.5}Co_{0.25}Mn_{0.25}O_2$ (also referred to as NCM211), $LiNi_{0.6}Co_{0.2}Mn_{0.2}O_2$ (also referred to as NCM622), $LiNi_{0.8}Co_{0.1}Mn_{0.1}O_2$ (also referred to as NCM811)), lithium-nickel-cobalt-aluminum oxide (e.g., $LiNi_{0.85}Co_{0.15}Al_{0.05}O_2$), and modified compounds thereof, and the like. Examples of lithium-containing phosphates with an olivine structure may include, but are not limited to, at least one of lithium iron phosphate (e.g., $LiFePO_4$ (which may also be abbreviated as LFP)), a composite of lithium iron phosphate and carbon, lithium manganese phosphate (e.g., $LiMnPO_4$), a composite of lithium manganese phosphate and carbon, lithium iron manganese phosphate, and a composite of lithium iron manganese phosphate and carbon.

In some embodiments, the pore-forming agent is at least one selected from oxalic acid, ammonium bicarbonate, ammonium carbonate, urea, ammonium chloride, and ammonium fluoride, and a mass ratio of the pore-forming agent to the positive electrode active material is 1:100-8:100. The pore-forming agent is added to the positive electrode slurry, which is present stably at room temperature, and which completely decomposes into a gas that escapes after drying of the positive electrode plate, so as to form a pore channel in the positive electrode film layer, and no other harmful substances remain. By selecting the above-described pore-forming agent, it is possible to form well-distributed pores in the positive electrode plate, and by setting the mass ratio of the pore-forming agent and the positive electrode active material to satisfy the above-described ratio, it is possible to ensure electrolytic solution's effective infiltration and absorption, and to effectively enhance migration speed of lithium ions, thereby making the secondary battery to have a good initial direct current resistance (DCR).

In some embodiments, the positive electrode film layer optionally further comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer optionally further comprises a conductive agent. As an example, the conductive agent may include at least one of superconducting carbon, acetylene black, carbon black, cotinine black, carbon dots, carbon nanotubes, graphene, and carbon nanofibers.

In some embodiments, the positive electrode plate can be prepared by: dispersing the above-described components for preparing the positive electrode plate, such as the positive electrode active material, the pore-forming agent, the conductive agent, the binder, and any other components, in a solvent (e.g., N-methyl pyrrolidone) to form a positive electrode slurry; and applying the positive electrode slurry to a positive electrode current collector, and drying, cold pressing, and other processes, thereby obtaining the positive electrode plate.

[Negative electrode plate]

The negative electrode plate comprises a negative electrode current collector and a negative electrode film layer provided on at least one surface of the negative electrode current collector, and the negative electrode film layer comprises a negative electrode active material.

As an example, the negative electrode current collector has two surfaces opposite each other in its own thickness direction, and the negative electrode film layer is provided on either or both of the two surfaces of the negative electrode current collector.

In some embodiments, the negative electrode current collector may be a metal foil or a composite current

collector. For example, as a metal foil, a copper foil may be used. The composite current collector may comprise a polymeric material base layer and a metal layer formed on at least one surface of the polymeric material substrate. The composite current collector may be formed by forming a metallic material (copper, copper alloys, nickel, nickel alloys, titanium, titanium alloys, silver and silver alloys, and the like) on a polymeric material substrate (e.g., a substrate made of polypropylene (PP), polyethylene terephthalate (PET), polybutylene terephthalate (PBT), polystyrene (PS), polyethylene (PE), and the like).

In some embodiments, the negative electrode active material may be a negative electrode active material known in the art for batteries. As examples, the negative electrode active material may comprise at least one of artificial graphite, natural graphite, soft carbon, hard carbon, a silicon-based material, a tin-based material, and lithium titanate, among others. The silicon-based material may be at least one selected from monomeric silicon, silicon oxides, silicon carbon complexes, silicon nitrogen complexes, and silicon alloys. The tin-based material may be at least one selected from monomeric tin, tin oxides, and tin alloys. However, the present application is not limited to these materials and other conventional materials that can be used as negative electrode active materials for batteries can be used. These negative electrode active materials may be used single, or may be used in combination.

In some embodiments, the negative electrode film layer optionally further comprises a binder. The binder may be at least one selected from styrene butadiene rubber (SBR), polyacrylic Acid (PAA), sodium polyacrylate (PAAS), polyacrylamide (PAM), polyvinyl alcohol (PVA), sodium alginate (SA), polymethacrylatic acid (PMAA), and carboxymethyl chitosan (CMCS).

In some embodiments, the negative electrode film layer optionally further comprises a conductive agent. The conductive agent may be at least one selected from superconducting carbon, acetylene black, carbon black, Ketjen black, carbon dots, carbon nanotubes, graphene, and carbon nanofibers.

In some embodiments, the negative electrode film layer optionally further comprises other additives, such as a thickener (e.g., sodium carboxymethyl cellulose (CMC-Na)), etc.

In some embodiments, the negative electrode plate can be prepared by: dispersing the above-described components for preparing the negative electrode plate, such as the negative electrode active material, the conductive agent, the binder, and any other components, in a solvent (e.g., deionized water) to form a negative electrode slurry; and applying the negative electrode slurry to a negative electrode current collector, and drying, cold pressing, and other processes, thereby obtaining the negative electrode plate.

[Electrolyte]

The electrolyte acts as a conductor of ions between the positive electrode plate and the negative electrode plate. There is no specific limitation on the type of electrolyte in the present application, which can be selected according to the needs. For example, the electrolyte may be liquid, gel or all-solid.

In some embodiments, an electrolytic solution is used as the electrolyte.

In some embodiments, the electrolytic solution comprises a dehydrating additive and the dehydrating additive is at least one selected from a compound of structural formula I, a compound of structural formula II, and an isocyanate compound,

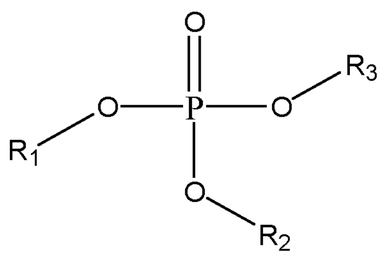

Formula I

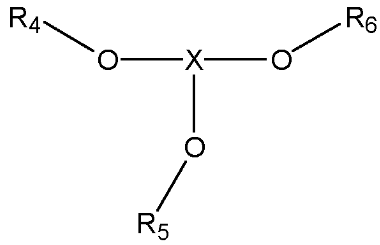

Formula II

in which

$R_1$, $R_2$, $R_3$, $R_4$, $R_5$ and $R_6$ are, independently of each other, silyl with a halogen-substituted or unsubstituted alkyl, or are a halogen-substituted or unsubstituted alkyl, and at least one of $R_1$, $R_2$ and $R_3$ is silyl with a halogen-substituted or unsubstituted alkyl and at least one of $R_4$, $R_5$ and $R_6$ is silyl with a halogen-substituted or unsubstituted alkyl, optionally, the $R_1$, $R_2$, $R_3$, $R_4$, $R_5$ and $R_6$ are, independently of each other, silyl having an unsubstituted C1-C6 alkyl, or are an unsubstituted C1-C6 alkyl group, and further optionally, $R_1$, $R_2$, $R_3$, $R_4$, $R_5$ and $R_6$ are, independently of each other, silyl having methyl, ethyl, propyl, or are butyl, or a methyl, ethyl, propyl, or butyl, and
X is phosphorus or boron.

In some embodiments, the dehydrating additive is at least one selected from tris(trimethylsilyl) phosphate, tris(trimethylsilyl) phosphite, diethyltrimethylsilyl phosphite, tris(trimethylsilyl) borate, hexamethylene diisocyanate, trimethylsilyl isocyanate, tolylene diisocyanate, dicyclohexylmethane diisocyanate, and isophorone diisocyanate.

In some embodiments, based on the total mass of the electrolytic solution, the mass percentage a of the dehydrating additive in the electrolytic solution is 0.1%-1%, optionally, the mass percentage a of the dehydrating additive in the electrolytic solution is 0.3%-0.7%. The dehydrating additive in the electrolytic solution can effectively reduce the detrimental effect of water on the battery performances, so as to provide the secondary battery with improved initial direct current resistance (DCR) and high temperature cycle performance.

In some embodiments, the electrolytic solution comprises a film-forming additive and the film-forming additive is at least one selected from adiponitrile, lithium difluoro-oxalate borate, vinyl ethylene carbonate, lithium difluorophosphate, lithium tetrafluoroborate, vinylidene carbonate, 1,3-propanesultone, and lithium trifluoromethanesulfonate and based on the total mass of the electrolytic solution, the mass percentage of the film-forming additive in the electrolytic solution is b, and $0.03 \leq a/b \leq 0.7$, optionally $0.05 \leq a/b \leq 0.5$, and further optionally $0.15 \leq a/b \leq 0.35$. By adding the film-forming additive to the electrolytic solution, it is possible to form a protective film (SEI film) on the surface of the positive and negative electrodes, to mitigate deterioration of the battery performances due to warming, and by making the amount of the dehydrating additive and the film-forming additive in the electrolytic solution to satisfy the above condition, it is possible to further reduce the detrimental effect of water on the battery performances, thereby improving the initial direct current resistance (DCR) and high temperature cycling performance of the secondary battery.

In some embodiments, the lithium salt is at least one selected from lithium hexafluorophosphate, lithium difluorooxalate borate and lithium bis(fluorosulfonyl)imide, and the mass percentage of the lithium salt in the electrolytic solution is 5%-18% based on the total mass of the electrolytic solution. By selecting the lithium salt, and by selecting the content of the lithium salt in the electrolytic solution, it is possible to improve the initial direct current resistance (DCR) and high temperature cycling performance of the secondary battery.

In some embodiments, the electrolytic solution comprises an organic solvent, and the organic solvent is at least one selected from dimethyl carbonate, diethyl carbonate, methyl ethyl carbonate, ethylene carbonate, propylene carbonate, fluoroethylene carbonate, and sulfolane. By selecting the above organic solvent, it is possible to improve the initial direct current resistance (DCR) and/or high temperature cycling performance of the secondary battery.

In some embodiments, the electrolytic solution optionally further comprises additives. For example, the additives may include additives that improve certain properties of the battery, such as additives that improve overcharging performance of the battery, additives that improve high or low temperature performance of the battery, and the like.

[Separator]

In some embodiments, the secondary battery further includes a separator. There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a

multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. The outer package of the secondary battery may alternatively be a soft bag, such as a pocket type soft bag. The soft bag may be made of plastic, which may be polypropylene, polybutylene terephthalate, poly(butylene succinate), and the like.

The present application does not have particular limitation on the shape of the secondary battery. The secondary battery may be cylindrical, cuboid, or in other shapes. Fig. 1 shows a secondary battery 5 with a cuboid structure as an example.

In some embodiments, as shown in Fig 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted by those skilled in the art according to requirements.

In some embodiments, the secondary battery according to the present application may be assembled into a battery module. The battery module may include one or a plurality of secondary batteries, and the specific quantity may be adjusted by those skilled in the art according to the application and capacity of the battery module.

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may be arranged in any other manners. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may also be assembled into a battery pack, and the quantity of the battery module included in the battery pack may be one or more, which can be adjusted by those skilled in the art according to the application and capacity of the battery pack.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 is used to cover the lower box body 3 to form a closed space for accommodating the battery modules 4. A plurality of battery modules 4 may be arranged in the battery box in any manner.

In addition, the present application further provides an electrical device, which includes at least one of the secondary battery, the battery module, and the battery pack of the present application. The secondary battery, the battery module, and the battery pack may be used as a power supply of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

Fig. 6 is a schematic diagram of an electrical device as an example. The electrical device is a pure electric vehicle, a hybrid electric vehicle, a plug-in hybrid electric vehicle, or the like. In order to meet requirements of the electrical device for high power and high energy density of secondary batteries, the battery pack or the battery module may be used.

As another example, the electrical device may be a mobile phone, a tablet computer, a notebook computer, or the like. The electrical device is generally required to be thin and light, so the secondary battery may be used as a power supply.

## Examples

In the following, examples of the present application are described. The examples described below are exemplary and are used only for explaining the present application and are not to be construed as a limitation of the present application. Where specific techniques or conditions are not indicated in the examples, they are in accordance with

the techniques or conditions described in the literature in the field or in accordance with the product specification. Where the manufacturer of the reagents or instruments used is not indicated, they are conventional products that can be obtained through market purchase.

I. Raw materials

Tris(trimethylsilyl) phosphate (TMSP, purchased from Sigma-Aldrich)
Tris(trimethylsilyl) phosphite (TMSPi, purchased from Sigma-Aldrich)
Diethyl trimethylsilyl phosphite ($C_7H_{19}O_3PSi$, purchased from Shanghai Aladdin Biochemical Technology Co.)
Tris(trimethylsilyl)borate (TMSB, purchased from Shanghai Aladdin Biochemical Science and Technology Co.)
Hexamethylene diisocyanate (HDI, purchased from Shanghai Aladdin Biochemical Technology Co.)
Trimethylsilyl isocyanate (C4H9NOSi, purchased from Shanghai Aladdin Biochemical Technology Co.)
Ethylene carbonate (EC, purchased from Shanghai Aladdin Biochemical Science and Technology Co.)
Propylene carbonate (PC, purchased from Shanghai Aladdin Biochemical Technology Co.)
Sulfolane (SL, purchased from Shanghai Aladdin Biochemical Science and Technology Co.)
Dimethyl carbonate (DMC, purchased from Shanghai Aladdin Biochemical Technology Co.)
Ethyl methyl carbonate (EMC, purchased from Shanghai Aladdin Biochemical Technology Co.)
Diethyl carbonate (DEC, purchased from Shanghai McLean Biotechnology Co.)
Vinylidene carbonate (VC, purchased from Shanghai McLean Biotechnology Co.)
Lithium hexafluorophosphate ($LiPF_6$, purchased from Guangzhou Tianzhi High-tech Material Co.)

I. Preparation of secondary battery

Example 1

[Negative electrode plate]

Artificial graphite as a negative active material, carbon black as a conductive agent, styrene-butadiene rubber (SBR) as a binder, and sodium carboxymethyl cellulose (CMC) as a thickening agent at a weight ratio of 97:0.5:1.5:1 were mixed homogenously, in deionized water, and then the resulting slurry were double-sided applied to a copper foil, followed by drying, cold pressing, to obtain the negative electrode plate. The coating amount was 0.2 g/cm$^2$, and the compaction density was 1.6 g/cm$^3$.

[Positive electrode plate]

Lithium iron phosphate (LFP) as a positive electrode active material, carbon black as a conductive agent, and polyvinylidene fluoride (PVDF) as a binder at a weight ratio of 97:0.5:2.5 were mixed in an appropriate amount of N-methyl pyrrolidone (NMP) with full stirring, into which ammonium carbonate powder as a pore-forming agent was subsequently added with fully stirring and mixed to form a homogeneous positive electrode slurry in which a mass ratio of the pore-forming agent to the positive electrode active material was 3:100. The resulting positive electrode slurry was applied to the surface of aluminum foil as a positive electrode current collector, vacuum dried at 110°C for 10 min, and subsequently rolled to obtain the positive electrode plate. The coating amount was 26 mg/cm$^2$, and the compaction density was 2.5 g/cm$^3$. The coating amount on one side was to maintain a capacity ratio of the negative electrode to the positive electrode at 1.1.

[Electrolytic solution]

The electrolytic solution was prepared in a BRAUN glove box, which was filled with 99.999% pure nitrogen, and the moisture in the glove box was controlled at ≤5ppm and the temperature was room temperature. Ethylene carbonate (EC), dimethyl carbonate (DMC), methyl ethyl carbonate (EMC), diethyl carbonate (DEC), tris (trimethylsilyl) borate (TMSB) as a dehydrating additive, lithium hexafluorophosphate ($LiPF_6$) were mixed in a mass ratio of 25:30:20:14.7:0.3:10, to obtain the electrolytic solution, in which the concentration of LiPF6 was 1 mol /L.

[Separator]

A polyethylene porous polymeric film was used as the separator.

[Preparation of battery]

The positive electrode plate, the separator, and the negative electrode plate were stacked in order, so that the separator was between the positive and negative electrode plates for isolation, and then wound to obtain a bare battery core. The bare battery core with a capacity of 100 Ah was placed in an outer packaging foil, and 300 g of the electrolytic solution prepared above was injected into the dried battery, followed by vacuum encapsulation, standing, chemical formation, shaping, and other processes, to obtain the secondary battery of Example 1. The outer package was selected as a hard shell case having a length×width×height=108 mm×35.5 mm×110.5 mm, in which the material of the case was aluminum, the thickness of the case was 0.8 mm, and the battery had a volume filling ratio of 95%.

Examples 2-7.

The preparation of the secondary battery was the same as that of Example 1, with the differences that the mass ratio of the pore-forming agent to the positive electrode active material, and the components of the electrolytic solution and the corresponding contents were different. Please refer to Table 1.

Examples 8-12

The preparation of the secondary battery was the same as that of Example 1, with the difference that: the dehydrating additives were tris(trimethylsilyl) phosphate (TMSP), hexamethylene diisocyanate (HDI), bis(trimethylsilyl) phosphite (TMSPi) diethyltrimethylsilylphosphate, and trimethylsilyl isocyanate ($C_4H_9NOSi$), respectively. Please refer to Table 1.

Examples 13-25.

The preparation of the secondary battery was the same as that of Example 1, with the differences in the mass ratio of the pore-forming agent to the positive electrode active material, and the components of the electrolytic solution and the corresponding contents. Please refer to Table 1.

Comparative Example 1

The preparation of the secondary battery was the same as Example 1, with the differences that the electrolytic solution did not contain a dehydrating additive and a film-forming additive vinylene carbonate (VC), and the components of the electrolytic solution and the corresponding contents were different. Please refer to Table 1.

II. Testing of related parameters

Porosity test of positive electrode film layer

The porosity of the positive electrode film layer in the positive electrode plate in the above examples and comparative examples was determined with reference to GB/T 24586-2009 Determination of Apparent Density, True Density and Porosity of Iron Ore (Conventional Method). The test Procedure was as follows.

A certain mass of sample was taken and placed in a true density meter AccuPyc II 1340, and the test system was closed, in which helium or nitrogen gas was passed through as programmed. The pressure of gas in the sample chamber and the expansion chamber was determined, and then a true volume was calculated according to Bohr's law (PV=nRT) to get the porosity of the positive electrode film layer of the present application. The results were shown in Table 2.

III. Testing of secondary battery performance

(1) Determination of Initial Direct Current Resistance (DCR)

At 25°C, the battery of each of the above examples and comparative examples was charged with a constant current of 0.5 C to 3.65V, and then charged with the constant voltage to a current of 0.05C; the battery was discharged with a constant current of 0.5 C for 30 minutes to adjust the battery to 50% SOC. At the moment, the voltage of the battery was recorded as U1. The battery was discharged with a constant current of 4C for 30 seconds, and the sampling time of 0.1 second was used, and the voltage at the end of the discharging period was recorded as U2. The initial DCR of the battery was expressed by the discharge DCR at 50% SOC, and the initial DCR of the battery = (U1-U2)/4C. Measurement data can be found in Table 2.

(2) Determination of energy density

At 25°C, the secondary battery in the above examples and comparative examples was charged to 3.65V with a constant current of 1/3C, then charged with a constant voltage of 3.65V to a current of 0.05C, and it was allowed to stand for 5 min, and then the battery was discharged to 2.5V with a constant current of 1/3C. At the moment, the battery discharging energy was recorded. Battery discharge energy divided by weight of the battery was a weight energy density of the battery, in Wh/kg. Measurement data can be found in Table 2.

(3) Determination of cycle performance at 60°C

At 60°C, the secondary battery of each of the above examples and comparative Examples was charged to 3.65V with a constant current of 0.5C, and then charged to 0.05C with that constant voltage. The battery was left to stand for 5 minutes, and then discharged to 2.5V with a constant current of 1/3C. This was the first charging and discharging cycle of the battery, and the discharging capacity at the moment was recorded as a discharging capacity for the first cycle of the battery. According to the above method, the battery was charged and discharged for 1000 cycles, and the discharging capacity of the battery after 1000 cycles was recorded. Capacity retention (%) of the battery after 1000 cycles at 60°C = (Discharged capacity of the battery after 1000 cycles / Discharged capacity of the battery for the first cycle) $\times$ 100%.

Table 1: Parameters related to the secondary battery of Examples 1-25 and Comparative Example 1

| Example No. | Components and respective contents in electrolytic solutions in % | | | | | | | | | | | | | | Mass ratio of pore-forming agent to positive electrode active material |
|---|---|---|---|---|---|---|---|---|---|---|---|---|---|---|---|
| | EC | PC | SL | DMC | EMC | DEC | VC | $C_4H_9NOSi$ | $C_7Hi_9O_3PSi$ | TMSPi | HDI | TMSP | TMSB | $LiPF_6$ | |
| 1 | 25 | - | - | 30 | 20 | 14.70 | - | - | - | - | - | - | 0.3 | 10 | 3:100 |
| 2 | 25 | - | - | 30 | 20 | 14.90 | - | - | - | - | - | - | 0.1 | 10 | 5:100 |
| 3 | 25 | - | - | 30 | 20 | 14.70 | - | - | - | - | - | - | 0.3 | 10 | 7:100 |
| 4 | 25 | - | - | 30 | 20 | 14.70 | - | - | - | - | - | - | 0.3 | 10 | 2:100 |
| 5 | 25 | - | - | 30 | 20 | 14.50 | - | - | - | - | - | - | 0.5 | 10 | 3:100 |
| 6 | 25 | - | - | 30 | 20 | 14.00 | - | - | - | - | - | - | 1 | 10 | 3:100 |
| 7 | 25 | - | - | 30 | 20 | 14.30 | - | - | - | - | - | - | 0.7 | 10 | 2:100 |
| 8 | 25 | - | - | 30 | 20 | 14.70 | - | - | - | - | - | 0.3 | - | 10 | 3:100 |
| 9 | 25 | - | - | 30 | 20 | 14.70 | - | - | - | - | 0.3 | - | - | 10 | 3:100 |
| 10 | 25 | - | - | 30 | 20 | 14.70 | - | - | - | 0.3 | - | - | - | 10 | 3:100 |
| 11 | 25 | - | - | 30 | 20 | 14.70 | - | - | 0.3 | - | - | - | - | 10 | 3:100 |
| 12 | 25 | - | - | 30 | 20 | 14.70 | - | 0.3 | - | - | - | - | - | 10 | 3:100 |
| 13 | 25 | - | - | 30 | 20 | 12.50 | 1.5 | - | - | - | - | - | 1 | 10 | 3:100 |
| 14 | 25 | - | - | 30 | 20 | 12.00 | 2 | - | - | - | - | - | 1 | 10 | 3:100 |
| 15 | 25 | - | - | 30 | 20 | 12.30 | 2 | - | - | - | - | - | 0.7 | 10 | 3:100 |
| 16 | 25 | - | - | 30 | 20 | 12.70 | 2 | - | - | - | - | - | 0.3 | 10 | 3:100 |
| 17 | 25 | - | - | 30 | 20 | 12.90 | 2 | - | - | - | - | - | 0.1 | 10 | 3:100 |
| 18 | 25 | - | - | 30 | 20 | 11.90 | 3 | - | - | - | - | - | 0.1 | 10 | 3:100 |
| 19 | 25 | - | - | 30 | 20 | 17.70 | 2 | - | - | - | - | - | 0.3 | 5 | 3:100 |
| 20 | 25 | - | - | 30 | 20 | 7.70 | 2 | - | - | - | - | - | 0.3 | 15 | 3:100 |
| 21 | 25 | - | - | 30 | 20 | 4.70 | 2 | - | - | - | - | - | 0.3 | 18 | 3:100 |

(continued)

| Example No. | Components and respective contents in electrolytic solutions in % | | | | | | | | | | | | | | Mass ratio of pore-forming agent to positive electrode active material |
|---|---|---|---|---|---|---|---|---|---|---|---|---|---|---|---|
| | EC | PC | SL | DMC | EMC | DEC | VC | $C_4H_9NOSi$ | $C_7Hi_9O_3PSi$ | TMSPi | HDI | TMSP | TMSB | $LiPF_6$ | |
| 22 | - | 25 | - | 30 | 20 | 12.70 | 2 | - | - | - | - | - | 0.3 | 10 | 3:100 |
| 23 | - | - | 25 | 30 | 20 | 12.70 | 2 | - | - | - | - | - | 0.3 | 10 | 3:100 |
| 24 | 15 | - | - | 30 | 20 | 22.70 | 2 | - | - | - | - | - | 0.3 | 10 | 3:100 |
| 25 | 60 | - | - | 10 | 15 | 2.70 | 2 | - | - | - | | - | 0.3 | 10 | 3:100 |
| Comparative Example 1 | 25 | - | - | 30 | 20 | 15.00 | - | - | - | - | - | - | - | 10 | 3:100 |

Table 2 Physicochemical parameters and performance results for secondary batteries of Examples 1-25 and Comparative Example 1

| Example No. | Porosity of electrode plates (%) | Content of dehydating additive * 100/porosity of positive electrode plate | Content of dehydrating additive /content of VC | DCR (mohm ) | Energy density (Wh/kg) | Cycle capacity retention at 60°C (%) |
|---|---|---|---|---|---|---|
| 1 | 30 | 1.0 | - | 3.5 | 178 | 76.0 |
| 2 | 50 | 0.2 | - | 3.0 | 170 | 75.4 |
| 3 | 70 | 0.4 | - | 2.9 | 160 | 76.5 |
| 4 | 20 | 1.5 | - | 4.0 | 183 | 76.8 |
| 5 | 30 | 1.7 | - | 4.0 | 178 | 76.7 |
| 6 | 30 | 3.3 | - | 4.3 | 178 | 77.5 |
| 7 | 20 | 3.5 | - | 4.3 | 183 | 77.6 |
| 8 | 30 | 1.0 | - | 3.4 | 178 | 75.9 |
| 9 | 30 | 1.0 | - | 3.9 | 178 | 76.2 |
| 10 | 30 | 1.0 | - | 4.0 | 178 | 77.2 |
| 11 | 30 | 1.0 | - | 4.0 | 178 | 77.4 |
| 12 | 30 | 1.0 | - | 3.8 | 178 | 77.3 |
| 13 | 30 | 3.3 | 0.67 | 4.5 | 178 | 79.6 |
| 14 | 30 | 3.3 | 0.5 | 4.9 | 178 | 80.8 |
| 15 | 30 | 2.3 | 0.35 | 4.6 | 178 | 80.5 |
| 16 | 30 | 1.0 | 0.15 | 4.4 | 178 | 80.3 |
| 17 | 30 | 0.3 | 0.05 | 4.3 | 178 | 80.2 |
| 18 | 30 | 0.3 | 0.03 | 4.8 | 178 | 80.8 |
| 19 | 30 | 1.0 | 0.15 | 4.3 | 178 | 80.4 |
| 20 | 30 | 1.0 | 0.15 | 4.6 | 178 | 79.9 |
| 21 | 30 | 1.0 | 0.15 | 4.9 | 178 | 79.7 |
| 22 | 30 | 1.0 | 0.15 | 4.5 | 178 | 78.2 |
| 23 | 30 | 1.0 | 0.15 | 4.2 | 178 | 78.7 |
| 24 | 30 | 1.0 | 0.15 | 4.6 | 178 | 79.7 |
| 25 | 30 | 1.0 | 0.15 | 4.3 | 178 | 80.4 |
| Comparative Example 1 | 30 | - | - | 6.4 | 178 | 68.3 |

As can be seen from the foregoing, compared with Comparative Example 1, for the secondary battery of examples 1-25 of the present application, when adopting a higher coating amount and a higher compaction density to improve the energy density of the battery, by adjusting the porosity of the positive electrode film layer, it is possible to effectively improve infiltration of the electrolytic solution in the electrode plate and to increase the lithium-ion migration speed, so as to enable the secondary battery to have a lower initial direct current resistance (DCR). At the same time, by means of the dehydrating additive in the electrolytic solution, it is possible to effectively reduce the unfavorable effects of unwanted water in the battery, thereby obtaining a secondary battery that combines a high energy density as well as improved initial direct current resistance (DCR) and high temperature cycling performance.

It should be noted that the present application is not limited to the above embodiments. The above embodiments are only examples, and embodiments having substantially the same composition and performing the same effect as the technical idea within the scope of the technical solution of the present application are included in the technical scope of the present application. In addition, within the scope of the present application, the present application also covers other ways

of constructing the embodiments by combining some of the elements of the embodiments and applying various deformations to the embodiments that a person skilled in the art can think of without departing from the subject matter of the present application.

## Claims

1. A secondary battery, **characterized in that** the secondary battery comprises a positive electrode plate and an electrolytic solution, wherein

   the positive electrode plate comprises a positive electrode current collector and a positive electrode film layer provided on at least one surface of the positive electrode current collector, the positive electrode film layer has a porosity of P, the electrolytic solution comprises a dehydrating additive, and based on a total mass of the electrolytic solution, a mass percentage of the dehydrating additive in the electrolytic solution is a, and
   the secondary battery satisfies:

$$0.2 \leqslant (a*100)/P \leqslant 3.5.$$

2. The secondary battery as claimed in claim 1, **characterized in that** the secondary battery satisfies: $0.4 \leq (a*100)/P \leq 3.3$; optionally, the secondary battery satisfies: $1.0 \leq (a*100)/P \leq 1.7$.

3. The secondary battery as claimed in claim 1 or 2, **characterized in that** the dehydrating additive is at least one selected from a compound of structural formula I, a compound of structural formula II, and an isocyanate compound,

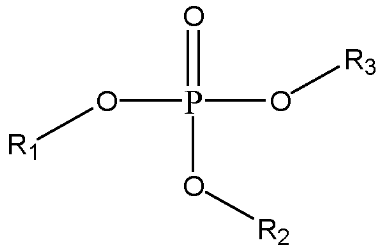

Formula I

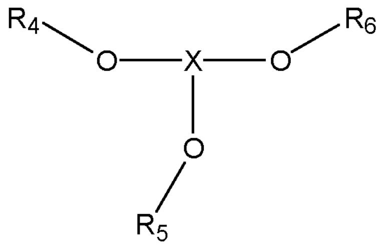

Formula II

in which

$R_1$, $R_2$, $R_3$, $R_4$, $R_5$ and $R_6$ are, independently of each other, silyl with a halogen-substituted or unsubstituted alkyl, or are a halogen-substituted or unsubstituted alkyl, and at least one of $R_1$, $R_2$ and $R_3$ is silyl with a halogen-substituted or unsubstituted alkyl and at least one of $R_4$, $R_5$ and $R_6$ is silyl with a halogen-substituted or unsubstituted alkyl,
optionally, the $R_1$, $R_2$, $R_3$, $R_4$, $R_5$ and $R_6$ are, independently of each other, silyl having an unsubstituted C1-C6 alkyl, or are an unsubstituted C1-C6 alkyl group, and at least one of $R_1$, $R_2$ and $R_3$ is silyl having an unsubstituted alkyl group, and at least one of $R_4$, $R_5$ and $R_6$ is silyl having an unsubstituted alkyl group,
further optionally, $R_1$, $R_2$, $R_3$, $R_4$, $R_5$ and $R_6$ are, independently of each other, silyl having methyl, ethyl, propyl, or are butyl, or a methyl, ethyl, propyl, or butyl, and at least one of $R_1$, $R_2$ and $R_3$ is silyl having methyl, ethyl, propyl, or butyl, at least one of $R_4$, $R_5$ and $R_6$ is silyl having methyl, ethyl, propyl, or butyl, and

X is phosphorus or boron.

4. The secondary battery as claimed in any one of claims 1 to 3, **characterized in that** based on the total mass of the electrolytic solution, a mass percentage a of the dehydrating additive in the electrolytic solution is 0.1%-1%, optionally, the mass percentage a of the dehydrating additive in the electrolytic solution is 0.3%-0.7%.

5. The secondary battery as claimed in any one of claims 1 to 4, **characterized in that** the dehydrating additive is at least one selected from tris(trimethylsilyl) phosphate, tris(trimethylsilyl) phosphite, diethyltrimethylsilyl phosphite, tris(trimethylsilyl) borate, hexamethylene diisocyanate, trimethylsilyl isocyanate, tolylene diisocyanate, dicyclohexylmethane diisocyanate, and isophorone diisocyanate.

6. The secondary battery as claimed in any one of claims 1 to 5, **characterized in that** the porosity P of the positive electrode film layer is from 20% to 70%, optionally, the porosity P of the positive electrode film layer is from 30% to 50%.

7. The secondary battery as claimed in any one of claims 1 to 6, **characterized in that** the electrolytic solution comprises a film-forming additive, and based on the total mass of the electrolytic solution, a mass percentage of the film-forming additive in the electrolytic solution is b, and
the secondary battery satisfies: $0.03 \leq a/b \leq 0.7$.

8. The secondary battery as claimed in claim 7, **characterized in that** the secondary battery satisfies: $0.05 \leq a/b \leq 0.5$; optionally, the secondary battery satisfies: $0.15 \leq a/b \leq 0.35$.

9. The secondary battery as claimed in claim 7, **characterized in that** the film-forming additive is at least one selected from adiponitrile, lithium difluoro-oxalate borate, vinyl ethylene carbonate, lithium difluorophosphate, lithium tetrafluoroborate, vinylidene carbonate, 1,3-propanesultone, and lithium trifluoromethanesulfonate.

10. The secondary battery as claimed in any one of claims 1 to 9, **characterized in that** the electrolytic solution comprises a lithium salt, the lithium salt is at least one selected from lithium hexafluorophosphate, lithium difluorooxalate borate and lithium bis(fluorosulfonyl)imide, and a mass percentage of the lithium salt in the electrolytic solution is 5%-18% based on the total mass of the electrolytic solution.

11. A method of preparing the secondary battery according to any one of claims 1 to 10 **characterized in** comprising preparing a positive electrode plate, wherein
preparing the positive electrode plate comprises forming a positive electrode film layer on at least one surface of the positive electrode current collector, in which the positive electrode film layer is formed by applying a positive electrode slurry on one surface of the positive electrode current collector, and the positive electrode slurry comprises a positive electrode active material and a pore-forming agent.

12. The method of preparing the secondary battery as claimed in claim 11, **characterized in that** the pore-forming agent is at least one selected from oxalic acid, ammonium bicarbonate, ammonium carbonate, urea, ammonium chloride, and ammonium fluoride, and a mass ratio of the pore-forming agent to the positive electrode active material is 1:100-8:100.

13. A battery module **characterized in** comprising the secondary battery as claimed in any one of claims 1 to 10.

14. A battery pack **characterized in** comprising the battery module as claimed in claim 13.

15. An electrical device **characterized in** comprising at least one selected from the secondary battery as claimed in any one of claims 1 to 10, the battery module as claimed in claim 13 and the battery pack as claimed in claim 14.

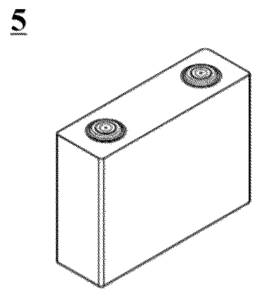


Fig. 1

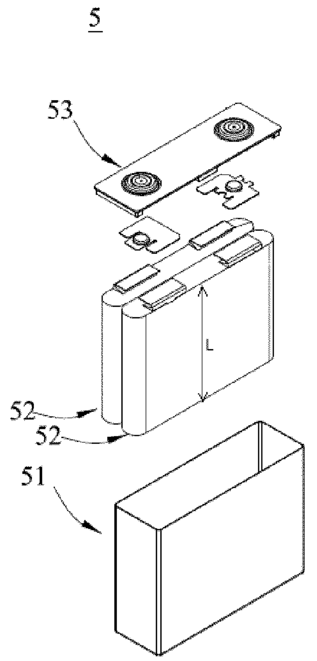


Fig. 2

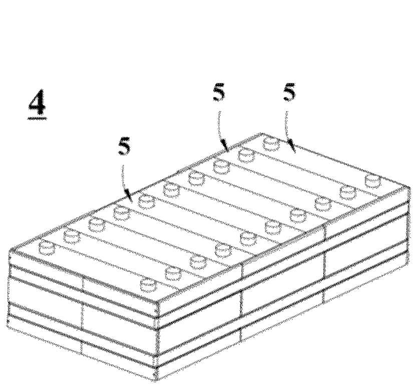


Fig. 3

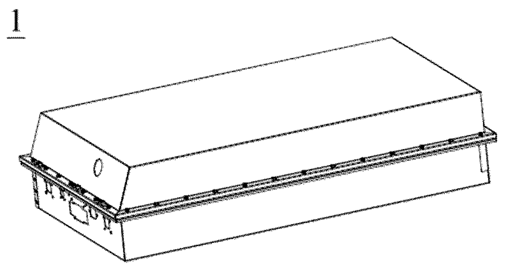


Fig. 4

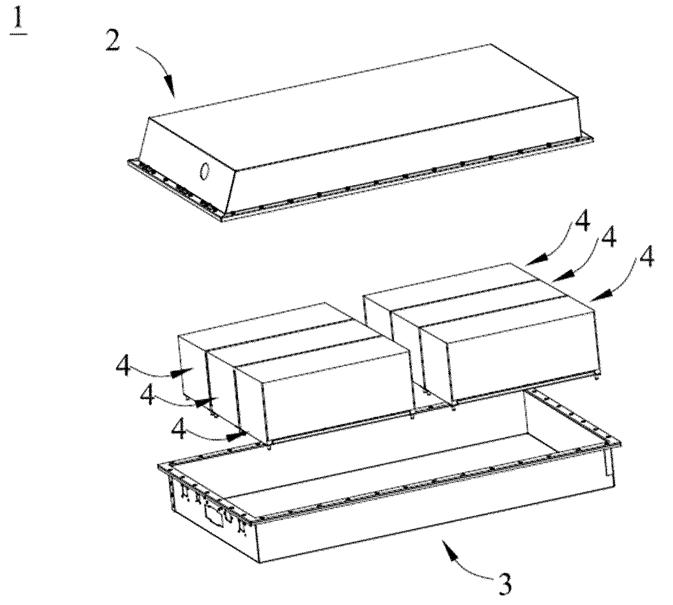


Fig. 5

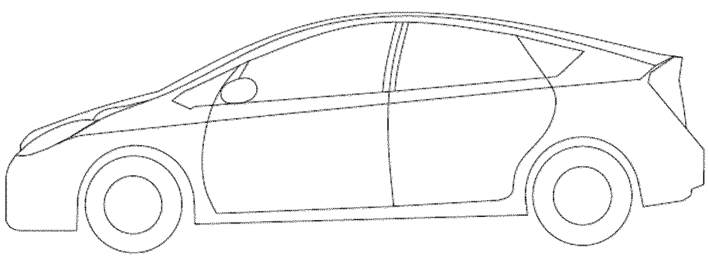

Fig. 6

## INTERNATIONAL SEARCH REPORT

International application No.
**PCT/CN2022/096293**

**A. CLASSIFICATION OF SUBJECT MATTER**

H01M4/13(2010.01)i;H01M10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 正极, 阴极, 孔隙率, 磷酸酯, 亚磷酸酯, 异氰酸酯, 浆料, positive electrode , cathode, porosity, phosphate, phosphite, isocyanate, slurry

**C. DOCUMENTS CONSIDERED TO BE RELEVANT**

| Category* | Citation of document, with indication, where appropriate, of the relevant passages | Relevant to claim No. |
|---|---|---|
| E | CN 114665065 A (SVOLT ENERGY TECHNOLOGY CO., LTD.) 24 June 2022 (2022-06-24)<br>description, paragraphs 4-37 | 1-6 |
| X | CN 111540945 A (NINGDE AMPEREX TECHNOLOGY LTD.) 14 August 2020 (2020-08-14)<br>description, paragraphs 40-123 | 1-15 |
| X | JP 2013030284 A (MITSUBISHI CHEMICAL CORPORATION) 07 February 2013 (2013-02-07)<br>description, paragraphs 2 and 19-227 | 1-15 |
| A | CN 101103070 A (MITSUI CHEMICALS INC.) 09 January 2008 (2008-01-09)<br>entire document | 1-15 |
| A | CN 109671950 A (TOYOTA MOTOR CORPORATION) 23 April 2019 (2019-04-23)<br>entire document | 1-15 |
| A | CN 114106047 A (VALIANT CO., LTD.) 01 March 2022 (2022-03-01)<br>entire document | 1-15 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2023** | **20 February 2023** |
| Name and mailing address of the ISA/CN<br>**China National Intellectual Property Administration (ISA/CN)**<br>**China No. 6, Xitucheng Road, Jimenqiao, Haidian District, Beijing 100088**<br>Facsimile No. **(86-10)62019451** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2022/096293**

| Patent document cited in search report | | | Publication date (day/month/year) | Patent family member(s) | | | Publication date (day/month/year) |
|---|---|---|---|---|---|---|---|
| CN | 114665065 | A | 24 June 2022 | None | | | |
| CN | 111540945 | A | 14 August 2020 | CN | 111540945 | B | 21 September 2021 |
| JP | 2013030284 | A | 07 February 2013 | None | | | |
| CN | 101103070 | A | 09 January 2008 | US | 2008090145 | A1 | 17 April 2008 |
| | | | | US | 8124272 | B2 | 28 February 2012 |
| | | | | WO | 2006075392 | A1 | 20 July 2006 |
| | | | | JPWO | 2006075392 | A1 | 12 June 2008 |
| | | | | JP | 4878290 | B2 | 15 February 2012 |
| | | | | KR | 20070090044 | A | 04 September 2007 |
| | | | | KR | 856955 | B1 | 04 September 2008 |
| | | | | CN | 101103070 | B | 25 August 2010 |
| CN | 109671950 | A | 23 April 2019 | US | 2019115598 | A1 | 18 April 2019 |
| | | | | US | 10784515 | B2 | 22 September 2020 |
| | | | | JP | 2019075222 | A | 16 May 2019 |
| | | | | JP | 6981164 | B2 | 15 December 2021 |
| | | | | CN | 109671950 | B | 24 June 2022 |
| CN | 114106047 | A | 01 March 2022 | None | | | |

Form PCT/ISA/210 (patent family annex) (July 2022)